(19) **Europäisches Patentamt / European Patent Office / Office européen des brevets**

(11) **EP 4 507 103 A1**

(12) **EUROPEAN PATENT APPLICATION**

(43) Date of publication:
**12.02.2025   Bulletin 2025/07**

(21) Application number: **23205480.9**

(22) Date of filing: **24.10.2023**

(51) International Patent Classification (IPC):
***H01M 50/403*** (2021.01)      ***H01M 50/417*** (2021.01)

(52) Cooperative Patent Classification (CPC):
**H01M 50/403; H01M 50/417**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **11.08.2023   TW 112130241**

(71) Applicant: **BenQ Materials Corporation
Taoyuan City 33341 (TW)**

(72) Inventors:
• **LO, Wan-Ting
  33341 Taoyuan City (TW)**
• **LO, Yi-Ting
  33341 Taoyuan City (TW)**
• **CHENG, Meng-Chia
  33341 Taoyuan City (TW)**
• **TSAI, Tzung-Yu
  33341 Taoyuan City (TW)**

(74) Representative: **Murgitroyd & Company
Murgitroyd House
165-169 Scotland Street
Glasgow G5 8PL (GB)**

(54) **A METHOD FOR MANUFACTURING LOW THERMAL SHRINKAGE SEPARATOR**

(57)      A low thermal shrinkage separator and a method for manufacturing thereof are disclosed. The method comprises providing a porous polyolefin substrate with a plurality of porous structures on the surfaces and interiors thereof, and applying a precursor solution comprising a titanium alkoxide and a photo-reactive agent, and subsequently irradiating by a UV light to form a low thermal shrinkage thin layer on the surface of the porous polyolefin substrate and the interior sidewalls of the porous structures of the porous polyolefin substrate. The present method can enhance the low thermal shrinkage and electrolyte wettability of the separator.

**EP 4 507 103 A1**

**Description**

**CROSS - REFERENCE TO RELATED APPLICATION**

This application claims the benefit of Taiwanese patent application serial No. 112130241, filed on Aug. 11, 2023, the subject matter of which is incorporated herein by reference.

**BACKGROUND OF THE INVENTION**

**Field of Invention**

This invention relates to a method for manufacturing a low thermal shrinkage separator, wherein the enhanced thermal shrinkage resistance and electrolyte wettability thereof is enhanced.

**Description of Related Art**

In the internal structure of a lithium-ion battery, the separator is a key component, and is usually a porous polymer film, which acts as a physical barrier to prevent two electrodes from direct contact and controls ion transport in the battery. The separator of the lithium-ion battery is made of polyolefin material, such as, polyethylene (PE) or polypropylene (PP) and is mainly manufactured by dry-stretching method or wet-stretching method. The two methods basically are to melt a polymer resin, extrude the molten polymer resin into a film, and then stretch the film to form appropriate pores therein. The dry-stretching separator is usually thicker and can be stacked in multi-layers with high safety and low cost under high power. The wet-stretching separator is suitable for coating a ceramic coating on the surface of a polyolefin substrate to form a composite separator due to its thin thickness, high porosity and uniform pore size. Compared with the wet-stretching separator, the dry-stretching separator has certain advantages in mechanical properties, ion permeability and chemical resistance of electrolyte, and is widely used in ternary lithium batteries with high energy density. However, when the temperature of the lithium-ion battery exceeds 130°C, the shrinkage of the dry-stretching separator will easily cause the electrodes to directly contact each other and results in a short circuit. Therefore, the dry-stretching separator needs to overcome the disadvantages of high thermal shrinkage and poor electrolyte wettability.

**SUMMARY OF THE INVENTION**

The present invention discloses a method for manufacturing a low thermal shrinkage separator and a separator manufactured thereby. The low thermal shrinkage separator has both enhanced thermal shrinkage resistance and improved electrolyte wettability.

One aspect of the present invention is to provide a method for manufacturing a low thermal shrinkage separator, comprising the steps of providing a porous polyolefin substrate with a plurality of porous structures on the surfaces and interiors thereof; applying a precursor solution containing 0.1 wt% to 3.0 wt% titanium alkoxide and 0.05 wt% to 1.0 wt% photo-reactive agent to the porous polyolefin substrate; and irradiating by a UV light with a radiation dose of 10mJ/cm$^2$ to 1000 mJ/cm$^2$ to form a low thermal shrinkage thin layer on the surface and sidewalls of the porous structures of the porous polyolefin substrate.

According to an embodiment of the present method, the titanium alkoxide of the precursor solution is titanium methoxide, titanium ethoxide, titanium isopropoxide, titanium tert-butoxide, or combinations thereof, and is preferably titanium isopropoxide, and a solvent of the precursor solution is methanol, ethanol, isopropanol, or combinations thereof.

According to an embodiment of the present method, the photo-reactive agent is 2-isopropylthioxanthone, thioxanthone, thioxanthone derivatives or combinations thereof.

Another aspect of the present invention is to provide a low thermal shrinkage separator, comprising a porous polyolefin substrate with a plurality of porous structures on the surfaces and interiors thereof; and a low thermal shrinkage thin layer formed on the surface and sidewalls of the porous structures of the porous polyolefin substrate; wherein the low thermal shrinkage thin layer is a composite thin layer formed by cross-linked titanium alkoxide, photo-reactive agent, and hydrogen-containing carbon chains of the surfaces and the sidewalls of the porous structures of the porous polyolefin substrate.

The above and other aspects of the invention will become better understood with regard to the following detailed description of the preferred but non-limiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

## DETAILED DESCRIPTION OF THE INVENTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following description, numerous specific details are described in detail in order to enable the reader to fully understand the following examples. However, embodiments of the present invention may be practiced in case no such specific details.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The present invention provides a method for manufacturing a low thermal shrinkage separator, wherein a low thermal shrinkage thin layer is formed on the surface and sidewalls of the porous structures of the porous polyolefin substrate. The mechanical properties, ion permeability and chemical resistance of electrolyte of dry-stretching porous polyolefin substrate can be maintained, and also the thermal shrinkage resistance and electrolyte wettability can be improved without significantly increasing the thickness of the porous polyolefin substrate.

The separator prepared by the present method has a better thermal stability, wherein the thermal shrinkage rate in machine direction (MD) is less than 15% after heating at 130°C for 1 hour, preferably less than 12%, and the thermal shrinkage rate in machine direction (MD) is less than 40% after heating at 150°C for 1 hour, and the electrolyte wettability can also be enhanced.

According to an embodiment of the present method, the porous polyolefin substrate is a single-layered or multi-layered porous polyolefin substrate of polyethylene, polypropylene or copolymers thereof obtained by dry-stretching, for example, single-layered polyethylene, single-layered polypropylene, double-layered polyethylene/polypropylene or triple-layer polypropylene/polyethylene/polypropylene, but not limited thereto. In one embodiment of the present invention, the thickness of the porous polyolefin substrate is between 5 $\mu$m and 30 $\mu$m, preferably between 7 $\mu$m and 25 $\mu$m, and the porosity of the porous polyolefin substrate is between 40% and 70%, preferably between 43% and 65%.

The low thermal shrinkage separator disclosed in the present invention can be prepared by a method comprising the steps of providing a porous polyolefin substrate with a plurality of porous structures on the surfaces and interiors thereof; applying a precursor solution containing 0.1wt% to 3wt% titanium alkoxide and 0.05 wt% to 1.0 wt% photo-reactive agent to the porous polyolefin substrate; and irradiating by a UV light with a radiation dose of 10mJ/cm$^2$ to 1000 mJ/cm$^2$ to form a low thermal shrinkage thin layer on the surface and sidewalls of the porous structures of the porous polyolefin substrate.

In the method for preparing the present low thermal shrinkage separator, the titanium alkoxide of the precursor solution is titanium methoxide, titanium ethoxide, titanium isopropoxide, titanium tert-butoxide, or combinations thereof, and is preferably titanium isopropoxide, and a solvent of the precursor solution is methanol, ethanol, isopropanol, or combinations thereof. In an embodiment of the present invention, the precursor solution contains a 0.1 wt% to 2.0 wt% titanium alkoxide.

According to an embodiment of the present method, the photo-reactive agent used in the precursor solution is 2-isopropylthioxanthone, thioxanthone, thioxanthone derivatives or combinations thereof.

In the conventional method for crosslinking polyolefin with saturated and stable carbon bonds, a UV light can be used to irradiate the polyolefin with carbon-hydrogen bonds with photo-reactive agents, wherein the photo-reactive agents and the polyolefin at the surfaces of the porous polyolefin substrate are able to form free radicals by hydrogen abstraction simultaneously in order to have a crosslinking reaction on the surfaces and the sidewalls of the porous structures of polyolefin with saturated and stable carbon bonds. In the embodiment of the present method, except of the porous polyolefin substrate and the photo-reactive agent, titanium alkoxide also comprises carbon-hydrogen bonds. Thus, when sufficient radiation of UV light is provided, the carbon-hydrogen bonds in the surfaces of the porous polyolefin substrate, in the photo-reactive agent and in the titanium alkoxide will create reactive free radicals to conduct a crosslinking reaction in order to generate a composite thin layer of cross-linked polyolefin, photo-reactive agent, and titanium alkoxide on the surfaces and the sidewalls of the porous structures of the porous polyolefin substrate.

According to an embodiment of the present method, the precursor solution preferably contains a 0.05 wt% to 0.8 wt% photo-reactive agent.

According to an embodiment of the present method, the precursor solution further comprises additives such as flame retardants, antioxidants, surface modifiers or antistatic agents.

Another aspect of the present invention is to provide a low thermal shrinkage separator, comprising a porous polyolefin substrate with a plurality of porous structures on the surfaces and interiors thereof; and a low thermal shrinkage thin layer formed on the surface and sidewalls of the porous structures of the porous polyolefin substrate; wherein the low thermal shrinkage thin layer is a composite thin layer of cross-linked titanium alkoxide, photo-reactive agent, and hydrogen-containing carbon chains of the surfaces and the sidewalls of the porous structures of the porous polyolefin substrate.

The present invention will be explained in further detail with reference to the examples. However, the present invention is not limited to these examples.

Examples

Example 1: Preparation of a separator

199.3 g of isopropanol was mixed and well-stirred with 0.5 g of titanium isopropoxide (TTIP) and 0.2 g of 2-isopropylthioxanthone at room temperature to generate a titanium isopropoxide solution.

A porous polyolefin substrate with a thickness of 13.8 $\mu$m (PP/PE/PP triple-layer separator, porosity 45%, obtained by BenQ Materials Co., Ltd.) was immersed in the titanium isopropoxide solution of this example for 30 seconds and the residual solution on the surface was removed and dried at 80 °C for 5 minutes, and then irradiated by a UV light with a wavelength of 360 nm and a radiation dose of 500 mJ/cm$^2$ under a nitrogen environment to obtain a low thermal shrinkage separator with a low thermal shrinkage thin layer with cross-linked structures on the surface and the sidewalls of the porous structures of the porous polyolefin substrate.

The obtained low thermal shrinkage separator was tested by the following methods. The testing results were shown as the following Table 1.

Thickness of separators: The thickness was measured according to GB/T6672-2001. The Thickness Analyzer (VL-50-B, available from Mitutoyo, Japan) was used to measure the thickness of the separators. The measurement was conducted by a flat probe with a diameter of 3 mm under a measuring force of 0.01N.

Measurement of Gurley number: The Gurley number was measured according to ASTM D-726. The separator was cut into a sample of 1 inch ×1 inch and tested by an air permeability tester. The Gurley number was obtained by measuring the time for 100 C.C. of air to pass through the separator.

Thermal shrinkage test: The separator was cut into a sample of 10 cm × 10 cm, and the initial length in machine direction (MD) and the initial length in transverse direction (TD) were measured and marked as M0 and T0 on the center of the sample before testing. Then the marked sample was sandwiched between two A4 papers and heated in an oven at 130 °C 150 °C for 1 hr respectively. After heating, the sample was moved out of the oven and put in the same environment as that of the thermal shrinkage measuring instrument for 30 minutes, and then the length in machine direction (MD) and the length in transverse direction (TD) were measured and marked as M1 and T1 and calculated in according with the following formula.

$$\text{Thermal shrinkage rate (SMD) in machine direction (MD)} = (M0\text{-}M1)/M0 \times 100\%$$

$$\text{Thermal shrinkage rate (STD) in transverse direction (TD)} = (T0\text{-}T1)/T0 \times 100\%$$

Absorptivity test: The separator for testing is cut into a sample of 80 mm × 10 mm, and the sample was vertically hung and soaked in a solvent (mixture of propylene carbonate (PC) and diethyl carbonate (DEC) in a weight ratio of 1:1) in a closed space, and the initial level height of the solvent was marked on the sample as a starting point. After 1 minute, the capillary absorbing height from the starting point of the sample was measured.

Measurement of contact angle : The contact angle of the separator sample was measured by the Surface Electro Optics (SEO) Phoenix-150 contact angle measuring instrument (available from Applied Microtech Inc., Taiwan), wherein propylene carbonate (PC, with a purity of 99%) was absorbed by an syringe with a needle diameter of 2 mm and installed on Phoenix-150, and the separator sample was fixed on the sample carrier of Phoenix-150, and then a volume droplet of the propylene carbonate (PC, with a purity of 99%) was injected onto the separator sample by the syringe, and the contact angle of the separator sample was determined after being measured with the optical system CCD and calculated by the computer software of Phoenix-150.

Impedance test: The separator for testing was cut into a sample with a diameter of 24 mm, immersed in an electrolyte for 10 minutes, sandwiched between two stainless steel electrodes to separate the two stainless steel electrodes and to make the two stainless steel electrodes tightly with applying a weight of 500 g, and then measured to obtain the current signal by the AC-impedance method, and the impedance value of the separator sample was calculated.

Example 2: Preparation of a separator

199 g of isopropanol was mixed and well-stirred with 0.8 g of titanium isopropoxide (TTIP) and 0.2 g of 2-isopropylthioxanthone at room temperature to generate a titanium isopropoxide solution. Then, a porous polyolefin substrate with a thickness of 13.8 $\mu$m (PP/PE/PP triple-layer separator, porosity 45%, obtained by BenQ Materials Co., Ltd.) was immersed in the titanium isopropoxide solution of this example for 30 seconds and the residual solution on the surface was removed and dried at 80 °C for 5 minutes, and then irradiated with a wavelength of 360 nm and a radiation dose of 500 mJ/cm$^2$ under a nitrogen environment to obtain a low thermal shrinkage separator with a low thermal shrinkage thin layer with cross-linked structures on the surface and the sidewalls of the porous structures of the porous polyolefin substrate.

The obtained separator was tested by the above methods. The testing results were shown as the following Table 1.

Example 3: Preparation of a separator

198.2 g of isopropanol was mixed and well-stirred with 1.6 g of titanium isopropoxide (TTIP) and 0.2 g of 2-isopropylthioxanthone at room temperature to generate a titanium isopropoxide solution. Then, a porous polyolefin substrate with a thickness of 13.8 $\mu$m (PP/PE/PP triple-layer separator, porosity 45%, obtained by BenQ Materials Co., Ltd.) was immersed in the titanium isopropoxide solution of this example for 30 seconds and the residual solution on the surface was removed and dried at 80 °C for 5 minutes, and then irradiated with a wavelength of 360 nm and a radiation dose of 500 mJ/cm$^2$ under a nitrogen environment to obtain a low thermal shrinkage separator with a low thermal shrinkage thin layer with cross-linked structures on the surface and the sidewalls of the porous structures of the porous polyolefin substrate.

The obtained separator was tested by the above methods. The testing results were shown as the following Table 1.

Comparative Example 1:

The same porous polyolefin substrate with a thickness of 13.8 $\mu$m (PP/PE/PP triple-layer separator, porosity 45%, obtained by BenQ Materials Co., Ltd.) as in Examples 1 to 3 was used as the Comparative Example 1, and the separator was tested by the methods described in Example 1, and the testing results were shown as the following Table 1.

Table 1. Testing results of Examples 1~3 and Comparative Example 1

| Table 1 | | Comparative Example 1 | Example 1 | Example 2 | Example 3 |
|---|---|---|---|---|---|
| Total thickness of the separator ($\mu$m) | | 13.8 | 13.8 | 13.8 | 13.8 |
| Thickness of the porous substrate ($\mu$m) | | 13.8 | 13.8 | 13.8 | 13.8 |
| Gurley Number (sec/100c.c.) | | 125 | 123 | 120 | 121 |
| Thermal Shrinkage (130 °C @1hr) | MD | 27 | 11.3 | 10.5 | 10.6 |
| | TD | 0 | 0 | 0 | 0 |
| Thermal Shrinkage (150 °C @1hr) | MD | 45 | 40 | 37 | 36 |
| | TD | 0 | 0 | 0 | 0 |
| Capillary Absorbing Height (mm) | | 0.5 | 2.0 | 2.0 | 2.0 |
| Contact Angle (°) | | 52.3 | 47 | 42 | 41 |
| Impedance(ohm/cm$^2$) | | 0.49 | 0.53 | 0.52 | 0.53 |

As shown in the testing results listed in Table 1, the low thermal shrinkage separators of Examples 1 to 3 of the present invention have enhanced thermal shrinkage resistance better compared to Comparative Example 1, and the electrolyte wettabilities of the low thermal shrinkage separators of Examples 1 to 3 of the present invention are better than that of the separator of the Comparative Example 1, which can also improve the electrical performance of the lithium batteries utilizing the low thermal shrinkage separators of Examples 1 to 3 of the present invention.

Although particular embodiments have been shown and described, it should be understood that the above discussion is not intended to limit the present invention to these embodiments. Persons skilled in the art will understand that various changes and modifications may be made without departing from the scope of the present invention as literally and equivalently covered by the following claims.

**Claims**

1. A method for manufacturing a low thermal shrinkage separator, comprising the steps of:

    providing a porous polyolefin substrate with a plurality of porous structures on surfaces and interiors thereof;
    applying a precursor solution containing 0.1 wt% to 3.0 wt% titanium alkoxide and 0.05 wt% to 1.0 wt% photo-reactive agent to the porous polyolefin substrate; and
    irradiating by a UV light with a radiation dose of 10mJ/cm$^2$ to 1000 mJ/cm$^2$ to form a low thermal shrinkage thin layer on a surface and sidewalls of the porous structures of the porous polyolefin substrate.

2. The method as claimed in Claim 1, wherein the titanium alkoxide of the precursor solution is titanium methoxide, titanium ethoxide, titanium isopropoxide, titanium tert-butoxide, or combinations thereof.

3. The method as claimed in Claim 2, wherein the titanium alkoxide of the precursor solution is titanium isopropoxide.

4. The method as claimed in Claim 1, wherein a solvent of the precursor solution is methanol, ethanol, isopropanol, or combinations thereof.

5. The method as claimed in Claim 1, wherein the precursor solution contains a 0.1 wt% to 2.0 wt% titanium alkoxide.

6. The method as claimed in Claim 1, wherein the photo-reactive agent is 2-isopropylthioxanthone, thioxanthone, thioxanthone derivatives or combinations thereof.

7. The method as claimed in Claim 1, wherein the precursor solution contains a 0.05 wt% to 0.8 wt% photo-reactive agent.

8. The method as claimed in Claim 1, wherein the porous polyolefin substrate is a single-layered or multi-layered porous polyolefin substrate of polyethylene, polypropylene or copolymers thereof obtained by dry-stretching.

9. The method as claimed in Claim 1, wherein the precursor solution is applied by dip coating or spray coating.

10. A low thermal shrinkage separator, comprising:

    a porous polyolefin substrate with a plurality of porous structures on surfaces and interiors thereof; and
    a low thermal shrinkage thin layer formed on the surface and the sidewalls of the porous structures of the porous polyolefin substrate;
    wherein the low thermal shrinkage thin layer is a composite thin layer of cross-linked titanium alkoxide, photo-reactive agent, and hydrogen-containing carbon chains of the surfaces and the sidewalls of the porous structures of the porous polyolefin substrate.

Europäisches
Patentamt

European
Patent Office

Office européen
des brevets

# EUROPEAN SEARCH REPORT

**Application Number**

**EP 23 20 5480**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2015 0084337 A (UNIV SUNGKYUNKWAN RES & BUS [KR]) 22 July 2015 (2015-07-22) | 10 | INV.<br>H01M50/403 |
| A | * abstract *<br>* paragraphs [0006] – [0015] *<br>* paragraphs [0026] – [0035] *<br>* paragraphs [0041] – [0046] *<br>* paragraphs [0069] – [0079] *<br>* claims 1-19 * | 1-9 | H01M50/417 |
| | ----- | | |
| A | US 2012/315384 A1 (ABD ELHAMID MAHMOUD H [US] ET AL) 13 December 2012 (2012-12-13)<br>* abstract *<br>* paragraph [0024] *<br>* paragraphs [0033] – [0035] *<br>* paragraph [0042] *<br>* claims 1-20 * | 1-10 | |
| | ----- | | |
| A | US 2013/327704 A1 (WU MARK Y [TW] ET AL) 12 December 2013 (2013-12-12)<br>* the whole document * | 1-10 | |
| | ----- | | |

**TECHNICAL FIELDS SEARCHED (IPC)**

H01M

The present search report has been drawn up for all claims

| Place of search | Date of completion of the search | Examiner |
|---|---|---|
| Munich | 8 May 2024 | Stachowiak, Olaf |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 20 5480**

This annex lists the patent family members relating to the patent documents cited in the above-mentioned European search report.
The members are as contained in the European Patent Office EDP file on
The European Patent Office is in no way liable for these particulars which are merely given for the purpose of information.

**08-05-2024**

| Patent document cited in search report | Publication date | Patent family member(s) | | Publication date |
|---|---|---|---|---|
| KR 20150084337 A | 22-07-2015 | KR | 20150084337 A | 22-07-2015 |
| | | WO | 2015105223 A1 | 16-07-2015 |
| US 2012315384 A1 | 13-12-2012 | CN | 102820445 A | 12-12-2012 |
| | | DE | 102012209381 A1 | 13-12-2012 |
| | | US | 2012315384 A1 | 13-12-2012 |
| US 2013327704 A1 | 12-12-2013 | TW | 201351758 A | 16-12-2013 |
| | | US | 2013327704 A1 | 12-12-2013 |

EPO FORM P0459

For more details about this annex : see Official Journal of the European Patent Office, No. 12/82

**EP 4 507 103 A1**

**Patent documents cited in the description**

- TW 112130241